Europäisches Patentamt

European Patent Office

Office européen des brevets

(11) Veröffentlichungsnummer: **0 187 785**
**B1**

(12) **EUROPÄISCHE PATENTSCHRIFT**

(45) Veröffentlichungstag der Patentschrift:
12.10.88

(51) Int. Cl.⁴: **G 01 N 27/56**

(21) Anmeldenummer: 85903220.3

(22) Anmeldetag: 04.07.85

(86) Internationale Anmeldenummer:
PCT/DE 85/00229

(87) Internationale Veröffentlichungsnummer:
WO 86/00709 (30.01.86 Gazette 86/03)

(54) **MESSFÜHLER FÜR DIE BESTIMMUNG DES SAUERSTOFFGEHALTES IN GASEN.**

(30) Priorität: 06.07.84 DE 8420216 U
30.03.85 DE 3511730

(43) Veröffentlichungstag der Anmeldung:
23.07.86 Patentblatt 86/30

(45) Bekanntmachung des Hinweises auf die Patenterteilung:
12.10.88 Patentblatt 88/41

(84) Benannte Vertragsstaaten:
AT CH DE FR GB IT LI SE

(56) Entgegenhaltungen:
DE-A-2 351 815
GB-A-2 030 304
US-A-3 835 012
US-A-3 891 529
US-A-4 111 778

(73) Patentinhaber: ROBERT BOSCH GMBH, Postfach
50, D-7000 Stuttgart 1 (DE)

(72) Erfinder: RAFF, Lothar, Wunnensteinstr. 24, D-7148
Remseck 3 (DE)
Erfinder: WEYL, Helmut, Peter- von- Koblenz- Str.
34, D-7141 Schwieberdingen (DE)
Erfinder: WIEDENMANN, Hans- Martin,
Brucknerstr. 20, D-7000 Stuttgart 1 (DE)

## Beschreibung

Die Erfindung geht aus von einem Meßfühler für die Bestimmung des Sauerstoffgehaltes in Gasen nach der Gattung des Hauptanspruchs. Es ist schon ein derartiger Meßfühler bekannt (DE-PS-2 338 536), der ein Schutzrohr aufweist, welches den aus einem rohrartigen Metallgehäuse meßgasseits herausragenden Abschnitt eines im wesentlichen aus keramischem Material bestehenden Meßelementes (Festelektrolytrohr) mit Abstand umgibt. Dieses Schutzrohr hat in seiner Seitenwand mehrere Öffnungen für den Eintritt der Meßgase und in seinem meßgasseitigen Boden eine im Durchmesser kleine Öffnung für den Austritt der Meßgase. Die in der Seitenwand des Schutzrohres befindlichen Öffnungen sind im Schutzrohr so ausgebildet, daß sie die Meßgase im wesentlichen tangential zur Innenfläche des Schutzrohres führen und somit das Meßelement weitgehend gegen Bombardierung durch im Meßgas enthaltenen Feststoffteilchen geschützt ist.

Aus der GB-A-2 030 304 ist ein Sauerstoff-Meßfühler mit einem Schutzrohr bekannt, das eine senkrecht zur Längsachse des Meßfühlers angeordnete ebene Bodenplatte aufweist. Diese meßgasseits weisende Bodenplatte hat mehrere Öffnungen, die mit der eigentlichen Meßkammer in Verbindung stehen; meßgasseits ist der perforierten Bodenplatte eine Feststoffteilchen-Falle zugeordnet. Die Gasaustrittsöffnungen sind in demjenigen Bereich des Schutzrohres gelegen, der vom Meßfühler-Gehäuse umfaßt ist. Schutzrohre dieser Bauform sind aber nicht nur relativ teuer, sie befriedigen zudem auch nicht in ihrer Wirkungsweise.

Ferner ist aus der DE-A-2 351 851 auch bereits ein Sauerstoff-Meßfühler bekannt, dessen Schutzrohr vom Meßgas ebenfalls in Längsrichtung durchströmt wird. Das Schutzrohr besitzt Öffnungen in seinem Mantel, und zwar in jedem Fall im anschlußseitigen Endabschnitt des Schutzrohres; im abgasrohrseitigen Endabschnitt sind ebenfalls Öffnungen vorgesehen, und zwar entweder im Mantel oder stirnseits. Bei der Ausführungsform des Schutzrohres mit stirnseitigen Öffnungen wird von einem Blecheinsatz Gebrauch gemacht, der als Leitelement für das Meßgas dient; bei der Ausführungsform des Schutzrohres mit Öffnungen im abgasseitigen Bereich des Mantels ist ein kegelstumpfförmiger Vorsatz in der stirnseitigen Öffnung des Mantels festgelegt. Beide genannten Schutzrohr-Ausführungsformen sind in Hinsicht auf eine Großserienproduktion zu teuer und ihre Wirksamkeit ist nicht voll befriedigend.

Der Erfindung liegt demgegenüber die Aufgabe zugrunde, ein Schutzrohr für einen Sauerstoff-Meßfühler zu schaffen, das einfach und wirtschaftlich herstellbar ist und besonders wirksam Verschmutzungen bzw. Vergiftungen des Meßelementes verhindert; infolge der Gestaltung des Schutzrohres sollen Ölaschen, Reaktionsprodukte des Bleis, metallischer Staub von Motorventilen vom Meßelement weitgehend ferngehalten werden und demzufolge die Lebensdauer des Meßfühlers verlängert werden. Das Schutzrohr soll darüber hinaus auch bewirken, daß nicht repräsentative Meßgasspitzen zu Fehlregelungen führen können und die Ansprechzeiten von "hoher Sauerstoffanteil in Richtung kleiner Sauerstoffanteil" und umgekehrt von gleicher Länge sind; infolge dieses Verhaltens des Meßelementes soll eine Vereinfachung der elektronischen Auswerteschaltung möglich werden. Falls das Meßelement mit einem Widerstandsheizelement versehen ist, soll sich zudem auch eine Energieersparnis ergeben.

Diese Aufgabe wird gemäß der Erfindung mittels der im Anspruchs 1 aufgeführten Merkmale gelöst. Durch die in den abhängigen Ansprüchen aufgeführten Maßnahmen sind vorteilhafte Weiterbildungen des im Anspruch 1 angegebenen Meßfühlers möglich.

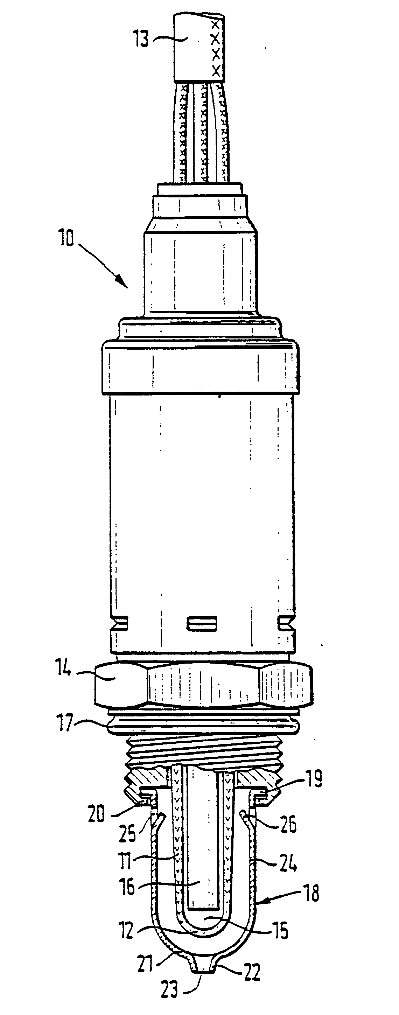

Ein Ausführungsbeispiel der Erfindung ist in der Zeichnung dargelegt und in der nachfolgenden Beschreibung näher erläutert. Die Figur zeigt eine Seitenansicht eines Meßfühlers in vergrößerter Darstellung, wobei der meßgasseitige Endabschnitt des Meßfühlers als Längsschnitt gezeigt ist.

Der in der Zeichnung dargestellte Meßfühler 10 für die Bestimmung des Sauerstoffgehaltes in Gasen ist insbesondere für die Verwendung in Abgasen von Brennkraftmaschinen vorgesehen; der prinzipielle Aufbau eines solchen Meßfühlers 10 ist bereits aus der deutschen Gebrauchsmusterschrifts 81 01 584 bekannt. Dieser Meßfühler 10 arbeitet nach dem bekannten Prinzip der Sauerstoffkonzentrationskette mit ionenleitendem Festelektrolyten; als Festelektrolyt findet bevorzugt stabilisiertes, kubisches Zirkondioxid Verwendung. Der Festelektrolyt ist im vorliegenden Beispiel als ein Festelektrolytrohr 11 ausgebildet, welches meßgasseits einen Boden 12 aufweist. Auf die Darstellung der schichtförmigen Elektroden auf der Außenseite und auf der Innenseite dieses Festelektrolytrohres 11 und auf eine Schutzschicht für die den Meßgasen ausgesetzte Elektrode wurde verzichtet; diese Elektroden sind bevorzugt als poröse Schichten auf dem Festelektrolytrohr 11 aufgebracht und sind in bekannter Weise mit elektrischen Anschlußteilen verbunden, von denen mindestens eines zu dem anschlußseitigem Kabel 13 führt; üblicherweise ist die auf der Außenseite des Festelektrolytrohres 11 befindliche Elektrode, welche katalysierende Wirkung hat, mit dem elektrisch an Masse liegenden Metallgehäuse 14 verbunden. In den Innenraum 15 des Festelektrolytrohres 11 ragt ein stabförmiges Widerstandsheizelement 16 hinein, das im wesentlichen den Innenraum 15 ausfüllt und bis nahe an den Boden 12 des Festelektrolytrohres 11 reicht; in vielen Anwendungsfällen dieses Meßfühlers 10 kann jedoch auf die Anordning eines Widerstandsheizelementes 16 verzichtet werden. Der Innenraum 15 des Festelektrolytrohres 11 ist einem Referenzgas (z. B. Luft) ausgesetzt, das mit der genannten, nicht darstellten Gegenelektrode in Kontakt steht. Der sonstige Aufbau dieses Meßfühlers 10 entspricht im wesentlichen dem Aufbau jenes Meßfühlers, der in der deutschen Gebrauchsmusterschrift 81 01 584 beschrieben ist; zusätzlich darstellt ist lediglich ein unverlierbar auf dem Metallgehäuse 14 festgelegter Dichtring 17.

Der meßgasseits aus dem Metallgehäuse 14 herausragende Abschnitt des Festelektrolytrohres 11 ist von einem becherartigen Schutzrohr 18 umgeben, das bevorzugt aus einem korrosionsfestem Stahlblech besteht. Dieses Schutzrohr 18 besitzt an seinem offenen Endabschnitt einen nach außen weisenden Flansch 19, welcher wellscheibenförmig ausgebildet und an der Stirnseite des Metallgehäuses 14 mittels eines Bördelrandes 20 befestigt ist. Das Schutzrohr 18 umgibt mit Abstand das Festelektrolytrohr 11 und besitzt meßgasseits einen Boden 21, der als konvexe Kuppe ausgebildet ist. Im am weitesten vorragenden Bereich dieses kuppenartigen Bodens 21 ist einen warzenartige, konvexe Ausbauchung 22 angeordnet, welche bevorzugterweise kegelstumpfförmig gestaltet ist und sich meßgasseits verjüngt. Diese Ausbauchung 22 enthält eine für den Eintritt der Meßgase vorgesehene Öffnung 23. Diese Öffnung 23 hat einen Durchmesser von 2,5 mm, kann - je nach Anwendungsfall - aber einen Durchmesser zwischen 1 und 4 mm, bevorzugt von 2 bis 3 mm haben. Die die Öffnung 23 umgebende Ausbauchung 22 hat dabei eine Höhe von 1 mm, kann - je nach Anwendungsfall - aber auch eine Höhe zwischen 0,3 bis 2 mm, bevorzugt von 0,4 bis 1,5 mm haben. Die Höhe des kuppenartigen Bodens 21 ist 4 mm, kann aber - je nach Anwendungsfall - aber zwishen 2,5 und 6 mm, bevorzugt zwischen 3 und 5 mm liegen. Die Gesamtlänge eines solchen Schutzrohres 18 beträgt 20 mm, kann aberje nach Anwendungsfallzwischen 12 und 30 mm, bevorzugt zwischen 18 und 25 mm liegen.

Für den Austritt der Meßgase aus dem Innenraum des Schutzrohres 18 sind in der Seitenwand 24 des Schutzrohres 18 sechs Öffnungen 25 angebracht, welcher sich nahe am meßgasseitigen Ende des Metallgehäuses 14 befinden und dabei einen Abstand von diesem Ende des Metallgehäuses 14 von weniger als 5 mm, bevorzugt von 1,5 bis 3 mm haben; im vorliegendem Beispiel beträgt dieser Abstand 2 mm. Der freie Querschnitt dieser Öffnungen 25 in der Seitenwand 24 des Schutzrohres 18 ist bevorzugterweise so bemessen, daß seine Höhe 0,5 mm und seine Breite 2 mm beträgt; je nach Anwendungsfall können diese Öffnungen 25 in ihrem freien Querschnitt variieren, und zwar zwischen 0,3 mm Höhe mal 1 mm Breite und 1 mm Höhe und 3 mm Breite. Die Anzahl dieser Öffnungen 25 kann - je nach Anwendungsfall - zwischen 3 und 9, bevorzugt aber zwischen 4 und 6 Stück liegen; bevorzugterweise sind diese Öffnungen 25 in der Seitenwand 24 des Schutzrohres 18 in einer einzigen, quer zur Längsachse des Schutzrohres 18 verlaufenden Ebene angeordnet.

Gemeinsam mit der Ausbauchung 22, welche mitttig die Öffnung 23 für den Gaseintritt enthält, ist für die vorteilhafte Wirkung dieses Schutzrohres 18 die Anordnung und Gestaltung der Umleitmittel 26 von Wichtigkeit, welche die aus den Öffnung 25 austretenden Meßgase im spitzen Winkel zur Längsachse des Schutzrohres 18 zurückleiten. Diese Umleitmittel 26 sind bevorzugt in die Seitenwand 24 des Schutzrohres 18 eingeschert und gebogen. Diese lappenartigen Umleitmittel 26 ragen dabei mit ihren freien Enden in den Innenraum des Schutzrohres 18 hinein und weisen dabei wesentlichen zum meßgasfernen Endabschnitt des Meßfühlers 10. Während die im Boden 21 des Schutzrohres 18 befindliche Ausbauchung 22 dafür sorgt, daß im Meßgas befindliche Feststofftteilchen erst gar nicht in den Innenraum des Schutzrohres 18 gelangen, bewirken diese beschriebenen Umleitmittel 26 an den Öffnungen 25, welche dem Gasaustritt dienen, neben der Unterstützung der Vorteile der Ausbauchung 22 insbesondere die bereits geschilderten Vorteile hinsichtlich von Vermeidung von Fehlregelungen und der Vereinfachung der elektronischen Auswerteschaltung; die kleinen Querschnitte der Öffnungen 23 und 25 und die damit erzielte geringere Meßgasmenge, welche durch das Schutzrohr 18 strömt, sorgen bei solchen Meßfühlern 10, die im Innenraum 25 ihres Festelektrolytrohres 11 ein Widerstandsheizelement 16 enthalten, außerdem für eine verringerte Heizleistung.

Als Meßelement für einen erfindungsgemäßen Meßfühler 10 kann aber nicht nur das vorstehend beschriebene Festelektrolytrohr 11 mit Boden 12 usw. Verwendung finden, sondern auch Meßelemente anderer Konfiguration (z. B. plättchenförmig wie in US-PS-4 011 655, 4 283 261) oder anderer Wirkungsweise (z. B. Widerstands- bzw. Leitfähigkeitsänderung wie in US-PS-4 007 435, 4 011 655); alle diese Meßelemente sind jedoch feste Körper.

**Patentansprüche**

1. Meßfühler für die Bestimmung des Sauerstoffgehaltes in Gasen, insbesondere in Abgasen von Brennkraftmaschinen, mit einem nur aus festen Stoffen bestehendem Meßelement, welches teilweise von einem rohrartigen Metallgehäuse abdichtend umfaßt ist und dessen den Meßgasen ausgesetzter Abschnitt mit einem becherartigen Schutzrohr versehen ist, welches mit seinem einen Endabschnitt am Metallgehäuse festgelegt ist, mit seinen anderen Bereichen den meßgasseits aus dem Metallgehäuse herausragenden Abschnitt des Meßelementes mit Abstand umgibt, für die Meßgase eine Öffnung in seinem meßgasseitigen Boden und mehrere Öffnungen mit Umleitmitteln in seiner Seitenwand besitzt, dadurch gekennzeichnet, daß der meßgasseitige Boden (21) des Schutzrohres (18) als konvexe Kuppe ausgebildet ist, in seinem am weitesten vorragenden Bereich eine warzenartige Ausbauchung (22) besitzt und in diese Ausbauchung (22) die für den Eintritt der Meßgase vorgesehene Öffnung (23) aufweist, und daß mehrere für den Austritt der Meßgase vorgesehene, nahe am meßgasnahen Ende des Metallgehäuses (14) angeordnete Öffnungen (25) angebracht sind, deren Umleitmittel (26) als in das Schutzrohr (18) eingescherte und gebogene Lappen ausgebildet sind, deren freie Enden in das Schutzrohr hineinragen, zum meßgasfernen Endabschnitt des Meßfühlers (10) weisen und demzufolge die in Längsrichtung das Schutzrohr (18) durchströmenden Gase in spitzem Winkel zur Längsachse des Schutzrohres (18) nach außen zurückleiten.

2. Meßfühler nach Anspruch 1, dadurch gekennzeichnet, daß das Schutzrohr (18) aus Metall besteht.

3. Meßfühler nach einem der Ansprüche 1 bis 2, dadurch gekennzeichnet, daß das Schutzrohr (18) eine Gesamtlänge von 12 bis 30 mm, bevorzugt von 18 bis 25 mm hat.

4. Meßfühler nach einem der Ansprüche 1 bis 3, dadurch gekennzeichnet, daß die für den Eintritt der Meßgase vorgesehene Öffnung (23) im Boden (21) des Schutzrohres (18) einen Durchmesser von 1 bis 4 mm, bevorzugt von 2 bis 3 mm hat.

5. Meßfühler nach einem der Ansprüche 1 bis 4, dadurch gekennzeichnet, daß die warzenartige Ausbauchung (22) des Schutzrohres (18) eine Höhe von 0,3 bis 2 mm, bevorzugt von 0,4 bis 1,5 mm hat.

6. Meßfühler nach Anspruch 5, dadurch gekennzeichnet, daß die Ausbauchung (22) des Schutzrohres (18) konvex ist.

7. Meßfühler nach Anspruch 5, dadurch gekennzeichnet, daß die Ausbauchung (22) im kuppenartigen Boden (21) des Schutzrohres (18) kegelstumpfförmig ausgebildet ist.

8. Meßfühler nach einem der Ansprüche 1 bis 7, dadurch gekennzeichnet, daß der kuppenartige Boden (21) des Schutzrohres (18) eine Höhe von 2,5 bis 6 mm, bevorzugt von 3 bis 5 mm hat.

9. Meßfühler nach einem der Ansprüche 1 bis 8, dadurch gekennzeichnet, daß die in der Seitenwand (24) des Schutzrohres (18) befindlichen, dem Austritt der Meßgase dienenden Öffnungen (25) vom meßgasfernen Ende des Metallgehäuses (14) einen Abstand von weniger als 5 mm, bevorzugt von 1,5 bis 3 mm haben.

10. Meßfühler nach einem der Ansprüche 1 bis 9, dadurch gekennzeichnet, daß die in der Seitenwand (24) des Schutzrohres (18) befindlichen, dem Austritt der Meßgase dienenden Öffnungen (25) einen freien Querschnitt zwischen 0,3 mm (Höhe) mal 1 mm (Breite) und 1 mm (Höhe) und 3 mm (Breite), bevorzugt von 0,5 mm (Höhe) mal 2 mm (Breite) haben.

11. Meßfühler nach einem der Ansprüche 1 bis 10, dadurch gekennzeichnet, daß das Schutzrohr (18) in seiner Seitenwand (24) zwischen 3 und 9, bevorzugt zwischen 4 und 6 für den Austritt der Meßgase vorgesehene Öffnungen (25) hat, die bevorzugt in einer einzigen, quer zur Längsachse des Schutzrohres (18) verlaufenden Ebene angeordnet sind.

12. Meßfühler nach einem der Ansprüche 1 bis 11, dadurch gekennzeichnet, daß der offene Endabschnitt des Schutzrohres (18) mit einem nach außen weisenden Befestigungsflansch (19) versehen ist, welcher bevorzugt ein wellscheibenartiges Profil hat.

**Claims**

1. Sensor for determining the oxygen concentration in gases, particularly in exhaust gases of internal combustion engines, having a measuring element which consists only of solid substances and which is partly sealingly surrounded by a tubular metal housing and whose portion exposed to the gases to be measured is provided with a beaker-like protective tube whose one end portion is fastened to the metal housing while its other regions surround and are spaced apart from that portion of the measuring element which on the side of the gas to be measured projects out of the metal housing, said protective tube having for the gases to be measured an opening in its bottom on the side of the gas to be measured and a plurality of openings, provided with deflector means, in its side wall, characterized in that the bottom (21) of the protective tube (18), on the side of the gas to be measured, is in the form of a convex dome and in its furthest projecting region has a nipple-like bulge (22) in which is provided the opening (23) for the admission of the gases to be measured, and that a plurality of openings (25) intended as outlets for the gases to be measured are provided close to that end of the metal housing (14) which is near the gas to be measured and have deflector means (26) in the form of tabs cut into and bent out from the protective tube (18), the free ends of said tabs projecting into the protective tube, being directed towards the end portion of the sensor (10) remote from the gas to be measured, and consequently directing back in the outward direction, at an acute angle to the longitudinal axis of the protective tube (18), the gases flowing through the protective tube (18) in the longitudinal direction.

2. Sensor according to claim 1, characterized in that the protective tube (18) is made of metal.

3. Sensor according to one of Claims 1 and 2, characterized in that the protective tube (18) has an overall length of 12 to 30 millimetres, preferably of 18 to 25 millimetres.

4. Sensor according to one of Claims 1 to 3, characterized in that the opening (23) provided in the bottorn (21) of the protective tube (18) for the admission of the gases to be measured has a diameter of 1 to 4 millimetres, preferably of 2 to 3 millimetres.

5. Sensor according to one of Claims 1 to 4, characterized in that the nipple-like bulge (22) on the protective tube (18) has a height of 0.3 to 2 millimetres, preferably of 0.4 to 1.5 millimetre.

6. Sensor according to Claim 5, characterized in that the bulge (22) on the protective tube (18) is convex.

7. Sensor according to Claim 5, characterized in that the bulge (22) in the dome-like bottom (21) of the protective tube (18) is frustoconical in shape.

8. Sensor according to one of Claims 1 to 7, characterized in that the dome-like bottom (21) of the protective tube (18) has a height of 2.5 to 6 millimetres, preferably of 3 to 5 millimetres.

9. Sensor according to one of Claims 1 to 8, characterized in that the openings (25) provided in the side wall (24) of the protective tube (18) to serve as outlets for the gases to be measured lie at a distance of less than 5 millimetres, preferably of 1.5 to 3 millimetres, from the end of the metal housing (14) remote from the gas to be measured.

10. Sensor according to one of Claims 1 to 9, characterized in that the openings (25) provided in the side wall (24) of the protective tube (18) to serve as outlets for the gases to be measured have a clear cross-section of between 0.3 millimetre (height) by 1 millimetre (width) and 1 mill imetre (height) by 3 millimetres (width), preferably of 0.5 millimetre (height) by 2 millimetres (width).

11. Sensor according to one of Claims 1 to 10, characterized in that the protective tube (18) has in its side wall (24) between three and nine, preferably between four and six openings (25) which serve as outlets for the gases to be measured and which are preferably disposed in a single plane extending transversely to the longitudinal axis of the protective tube (18).

12. Sensor according to one of Claims 1 to 11, characterized in that the open end portion of the protective tube (18) is provided with an outwardly directed fastening flange (19) which preferably has a profile resembling a corrugated washer.

**Revendications**

1. Sonde de mesure pour la détermination de la teneur en oxygène dans des gaz, en particulier dans les gaz d'échappement de moteurs à combustion interne, comportant un élément de mesure se composant d'un matériau solide qui est entouré partiellement de façon étanche par un carter métallique tubulaire, et dont la section orientée vers les gaz à analyser est muni d'un tube de protection en forme de godet, qui est fixé par sa section d'extrémité sur le carter métallique, entoure en laissant un intervalle, par ses autres zones, la section de l'élément de mesure faisant saillie du côté gaz à analyser, présente pour les gaz à analyser une ouverture dans le fond du côté gaz à analyser, et plusieurs ouvertures munies de moyens de dérivation dans sa paroi latérale, caractérisée en ce que le fond (21) côté gaz à analyser du tube de protection (18) est sous forme d'une coupelle convexe, possède à son extrémité la plus en saillie, un évasement (22) en forme de mamelon et dans celui-ci une ouverture (23) est prévue pour l'admission des gaz à analyser et en ce que plusieurs ouvertures (25) destinées à la sortie des gaz à analyser sont pratiquées au voisinage de l'extrémité côté gaz à analyser, dont les moyens de dérivation (26) sont sous forme de languettes courbées et empiètent sur le tube de protection (18), dont les extrémités libres font saillie dans le tube de protection, s'orientent vers la section d'extrémité de la sonde (10) éloignée du côté gaz à analyser, et en conséquence les gaz en écoulement dans la direction longitudinale du tube de protection (18) reviennent vers l'extérieur sous un angle aigu par rapport à l'axe longitudinal du tube de protection (18).

2. Sonde selon la revendication 1, caractérisée en ce que le tube de protection (18) est constitué de métal.

3. Sonde selon l'une des revendications 1 à 2, caractérisée en ce que le tube de protection (18) présente une longueur totale de 12 à 30 mm de préférence de 18 à 25 mm.

4. Sonde selon l'une des revendications 1 à 3, caractérisée en ce que l'ouverture (23) prévue pour l'admission des gaz à analyser dans le fond (21) du tube de protection (18) a un diamètre de 1 à 4 mm, de préférence de 2 à 3 mm.

5. Sonde selon l'une des revendications 1 à 4, caractérisée en ce que l'évasement en forme de mamelon (22) du tube de protection (18) a une hauteur de 0,3 à 2 mm, de préférence de 0,4 à 1,5 mm.

6. Sonde selon la revendication 5, caractérisée en ce que le mamelon (22) du tube de protection (18) est convexe.

7. Sonde selon la revendication 5, caractérisée en ce que le mamelon (22) est constitué sous forme de tronc de cône dans le fond en forme de coupelle (21) du tube de protection (18).

8. Sonde selon l'une des revendications 1 à 7, caractérisée en ce que le fond (21) en forme de coupelle du tube de protection (18) a une hauteur de 2,5 à 6 mm, de préférence de 3 à 5 mm.

9. Sonde selon l'une des revendications 1 à 8, caractérisée en ce que les ouvertures (25) se trouvant dans la paroi latérale (24) du tube de protection (18) et servant à la sortie des gaz à analyser sont éloignées de l'extrémité opposée aux gaz à analyser du carter métallique (14) d'un intervalle inférieur à 5 mm, de préférence de 1,5 à 3 mm.

10. Sonde selon l'une des revendications 1 à 9, caractérisée en ce que les ouvertures (24) servant à la sortie des gaz à analyser et se trouvant dans la paroi latérale (24) du tube de protection (18) ont une section libre comprise entre 0,3 mm (hauteur) sur 1 mm (largeur) et 1 mm (hauteur) et 3 mm (largeur), de préférence de 0,5 mm (hauteur) sur 2 mm (largeur).

11. Sonde selon l'une des revendications 1 à 10, caractérisée en ce que le tube de protection (18) possède dans sa paroi latérale (24) entre 3 et 9, de préférence entre 4 et 6 ouvertures (25) prévues pour la sortie des gaz à analyser qui sont disposées dans un plan unique s'étendant perpendiculairement à l'axe longitudinal du tube de protection (18).

12. Sonde selon l'une des revendications 1 à 11, caractérisée en ce que la section d'extrémité ouverte du tube de protection (18) est munie d'une bride de fixation (19) dirigée vers l'extérieur qui présente de préférence un profil en forme de rondelle ondulée.